# EUROPÄISCHE PATENTSCHRIFT

(11) **EP 0 878 656 B1**
(45) Veröffentlichungstag und Bekanntmachung des Hinweises auf die Patenterteilung: **14.04.2004**
(21) Anmeldenummer: 98102414.4
(22) Anmeldetag: 12.02.1998
(51) Int. Cl.: F16L 37/12, F16L 37/38, F16L 37/088, F16L 37/44

(54) **Steckkupplung mit Auslaufschutz**
Plug coupling with a protecting outlet device
Raccord emboîtable avec dispositif protecteur de sortie

(30) Priorität: 16.04.1997 DE 19715899
(43) Veröffentlichungstag der Anmeldung: 18.11.1998
(73) Patentinhaber: Voss Automotive GmbH, 51688 Wipperfürth (DE)
(72) Erfinder: Heinrichs, Gundolf, 51688 Wipperfürth (DE); Offenloch, Wolfgang, 74385 Pleidelsheim (DE)
(74) Vertreter: Patentanwälte Dr. Solf & Zapf

(56) Entgegenhaltungen:
- DE-A- 1 475 566
- DE-A- 2 016 850
- DE-C- 898 693
- US-A- 2 478 052

## Beschreibung

Die vorliegende Erfindung betrifft eine Steckkupplung gemäß dem Oberbegriff des Patentanspruchs 1.

Eine derartige Steckkupplung bzw. "Leitungskupplung" ist aus der DE-A-1 475 566 bekannt. Allerdings ist hierbei das Einsteckteil nicht von einem Rohrleitungsende gebildet, sondern es stellt ein gesondertes Gegenstück dar, auf das ein Schlauch aufgeschoben wird. Innerhalb des Aufnahmegehäuses ist ein etwa scheibenförmiger Dichtring angeordnet, der sowohl mit dem eingesteckten Einsteckteil als auch zum Auslaufschutz im entkuppelten Zustand mit dem Ventilelement dichtend zusammenwirkt. Dazu weist dieser scheibenförmige Dichtring auf einer Seite einen konischen oder kugeligen, jedenfalls kreisringförmigen Ventilsitz für den Ventilkörper auf. Gleichzeitig ist hierdurch ein Endanschlag für die Schließstellung des Ventilkörpers gebildet. Der Ventilkörper ist in einem innerhalb des Gehäuses befestigten, stromlinienförmigen Hohlkörper angeordnet, der auch eine Ventilfeder aufnimmt. Dieser Hohlkörper weist radiale Stege auf, mit denen er innerhalb des Anschlussgehäuses befestigt ist. Die so gebildete Ventilbaugruppe bzw. Ventilpatrone ist nicht bereits vor dem Einsetzen vormontiert, sondern die einzelnen Teile werden jeweils separat eingesetzt und durch Zusammenfügen (Verschrauben) von zwei Gehäuseteilen gehalten. Demzufolge fallen bei einer Demontage der Gehäuseteile auch die Bestandteile der Ventilbaugruppe sofort auseinander.

Die US-A-5,273,254 beschreibt einen Schnellverbinder für Fluidleitungen, der in einer Ausführungsform (Fig. 6 bis 8) eine vormontierte Ventilpatrone aufweist. Dabei ist zur Abdichtung des eingesteckten Einsteckteils ein separater Dichtring vorgesehen, der nicht auch zum Abdichten des Ventilelementes dient, weil das Ventil in einer Endanschlagstellung weit von dem Dichtring beabstandet ist.

Eine weitere Steckkupplung ist aus der EP 0 702 187 A1 bekannt. Dieser bekannte "Schnellverbinder" ist insofern konstruktiv aufwendig und folglich mit hohen Kosten verbunden, als einerseits die zur Abdichtung des eingesteckten Einsteckteils vorgesehene Umfangsdichtung aus zwei einzelnen Dichtringen besteht, und andererseits ist das Ventilelement in einer Führungshülse geführt, die über eine erste Dichtung gegen das Aufnahmegehäuse abgedichtet ist. Das Ventilelement selbst ist über eine zweite Dichtung in seiner Schließstellung gegen die Führungshülse abdichtbar.

Die DE 42 14 104 A1 beschreibt eine "leckagefreie Steckverbindung", die aus einem Kupplungsteil und einem in dieses einsteckbaren Steckerteil besteht. Sowohl in dem Kupplungsteil, als auch in dem Steckerteil ist jeweils ein Rückschlagventil angeordnet. Jedes Rückschlagventil besitzt eine eigene Dichtung zur Abdichtung gegen das Gehäuse in der Schließstellung, und das Steckerteil ist über eine gesonderte Umfangsdichtung gegen das Kupplungsteil abgedichtet.

Der vorliegenden Erfindung liegt die Aufgabe zugrunde, eine Steckkupplung der eingangs beschriebenen, gattungsgemäßen Art zu schaffen, die durch besonders einfache konstruktive Ausgestaltung kostengünstig und zudem auch einfach montierbar ist.

Erfindungsgemäß wird dies durch die Merkmale des Patentanspruchs 1 erreicht. Vorteilhafte Ausgestaltungen der Erfindung sind in den abhängigen Ansprüchen enthalten.

Durch die in einer vormontierten "Cartridge-Bauweise" ausgebildete Ventilpatrone in Verbindung mit der Doppelfunktion des zur Abdichtung allein vorgesehenen O-Rings ergibt sich ein montagefreundliche Ausgestaltung und somit kostengünstige Bauweise der Steckkupplung. Da das Ventilelement in der Schließstellung an dem hülsenartigen Einsatzgehäuse der Ventilpatrone anliegt, handelt es sich um eine wirklich vormontierte Baugruppe, die im vormontierten Zustand lediglich in das Aufnahmegehäuse eingesetzt zu werden braucht. Entsprechend ist auch eine einfache Demontage möglich, ohne dass die Bestandteile sofort auseinanderfallen könnten. Dennoch bleibt vorteilhafterweise die Doppelfunktion der Dichtung erhalten. Dies bedeutet, daß das Ventilelement zum Schließen des Aufnahmegehäuses unmittelbar mit derselben, eigentlich dem Einsteckteil zugeordneten Umfangsdichtung zusammenwirkt. Die von einem einzelnen Dichtring gebildete Umfangsdichtung ist im entkuppelten Zustand unmittelbar im Ringspalt zwischen dem Aufnahmegehäuse und dem Ventilelement und im gekuppelten Zustand unmittelbar zwischen dem Aufnahmegehäuse und dem Einsteckteil angeordnet. Konstruktiv wird dies dadurch ermöglicht, daß das Ventilelement einen mit der Umfangsdichtung zusammenwirkenden Dichtbereich aufweist, der bezüglich seiner Außenumfangskontur im wesentlichen dem Einsteckteil entspricht. Beim Einstecken kann dadurch das Einsteckteil durch die Umfangsdichtung geführt werden, wodurch gleichzeitig das Ventilelement von dieser (einzigen) Umfangsdichtung wegbewegt wird.

Es ist somit trotz der "Cartridge-Bauweise" nur eine einzige Umfangsdichtung erforderlich, um einerseits die Abdichtung zwischen dem eingesteckten Einsteckteil und dem Aufnahmegehäuse, andererseits aber auch die Abdichtung des Ventilelementes zum Auslaufschutz im entkuppelten Zustand zu gewährleisten. Hieraus resultiert eine sehr einfache und folglich preisgünstige Bauweise.

Weitere vorteilhafte Ausgestaltungsmerkmale der Erfindung sind in den Unteransprüchen sowie der folgenden Beschreibung enthalten.

Anhand von einigen Ausführungsbeispielen soll nun anhand der Zeichnung die Erfindung näher erläutert werden. Es zeigen:

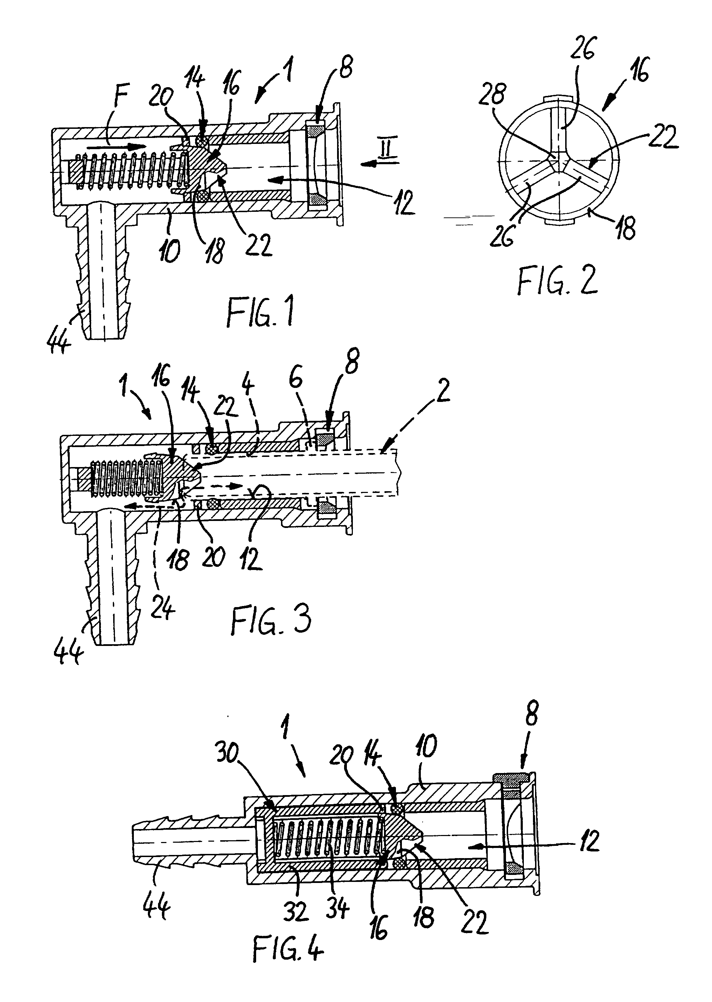

Dazu sei bemerkt, dass nur die Figuren 4 und 8 erfindungsgemäße Ausführungen zeigen, während die übrigen Figuren nur zur Erläuterung von vorteilhaften Ausgestaltungsmerkmalen dienen
- Fig. 1: einen Längsschnitt einer Steckkupplung in einer ersten, nicht erfindungsgemäßen Ausführungsform ohne Darstellung des Einsteckteils, d. h. im entkuppelten Zustand,
- Fig. 2: eine vergrößerte Stirnansicht des Ventilelementes in Pfeilrichtung II gemäß Fig. 1,
- Fig. 3: eine Darstellung der Steckkupplung nach Fig. 1 im gekuppelten Zustand (Einsteckteil gestrichelt eingezeichnet),
- Fig. 4: eine erfindungsgemäße Ausführung der Steckkupplung in sogenannter "Cartridge-Bauweise",
- Fig. 5: eine weitere nicht erfindungsgemäße Steckkupplung, wiederum im entkuppelten Zustand,
- Fig. 6: eine Stirnansicht des Ventilelementes in Pfeilrichtung VI gemäß Fig. 5,
- Fig. 7: die Steckkupplung nach Fig. 5 im gekuppelten Zustand (analog zu Fig. 3),
- Fig. 8: als Ausführungsvariante zu Fig. 5 und 7 eine zweite erfindungsgemäße Steckkupplung in "Cartridge-Bauweise" und
- Fig. 9: eine weitere, nicht erfindungsgemäße Ausführungsvariante der Steckkupplung nach Fig. 5 und 7.

In den verschiedenen Figuren der Zeichnung sind gleiche Teile stets mit den gleichen Bezugszeichen versehen und werden daher in der Regel auch jeweils nur einmal beschrieben.

Eine Steckkupplung 1 dient zum schnellen und lösbaren Anschluß eines Einsteckteils 2, welches nur in den Fig. 3, 7 und 8 jeweils gestrichelt eingezeichnet ist. Das Einsteckteil 2 ist insbesondere von einem Rohrleitungsende 4 gebildet und weist zum Zwecke der Verriegelung an seinem Außenumfang einen umlaufenden Ringwulst 6 auf, der mit einer im folgenden noch genauer erläuterten Verriegelungseinrichtung 8 zusammenwirkt. Der Ringwulst 6 kann auf kostengünstige Weise insbesondere durch Stauchung des Rohrleitungsendes 4 gebildet werden.

Die Steckkupplung 1 bildet eine Muffe und besteht aus einem Aufnahmegehäuse 10 mit einer Einstecköffnung 12 für das Einsteckteil 2. Innerhalb des Aufnahmegehäuses 10 ist eine Umfangsdichtung 14 zum Abdichten eines Ringspaltes zwischen dem Aufnahmegehäuse 10 und dem eingesteckten Einsteckteil 2 angeordnet. Ferner ist innerhalb des Aufnahmegehäuses 10 ein Ventilelement 16 angeordnet, welches nach Art eines Rückschlagventils im entkuppelten Zustand zum Auslaufschutz das Aufnahmegehäuse 10 selbsttätig schließt und beim Einstecken mittels des Einsteckteils 2 geöffnet wird.

Es ist vorgesehen, daß das Ventilelement 16 zum Schließen des Aufnahmegehäuses 10 unmittelbar mit derselben, dem Einsteckteil 2 zugeordneten Umfangsdichtung 14 zusammenwirkt. Dabei ist die Umfangsdichtung 14 von einem einfachen O-Ring gebildet, was besonders preiswert ist. Wie sich aus den Figuren 1, 4, 5 sowie 9 jeweils ergibt, ist die Umfangsdichtung 14 im entkuppelten Zustand unmittelbar im Ringspalt zwischen dem Aufnahmegehäuse 10 und dem Ventilelement 16 angeordnet. Im gekuppelten Zustand - vgl. die Figuren 3, 7 und 8 - ist die Umfangsdichtung 14 unmittelbar zwischen dem Aufnahmegehäuse 10 und dem Einsteckteil 2 angeordnet. Hierzu weist das Ventilelement 16 einen mit der Umfangsdichtung 14 zusammenwirkenden Dichtbereich 18 auf, der eine dem Einsteckteil 2 im wesentlichen entsprechende Außenumfangskontur, und zwar den gleichen Außendurchmesser, aufweist.

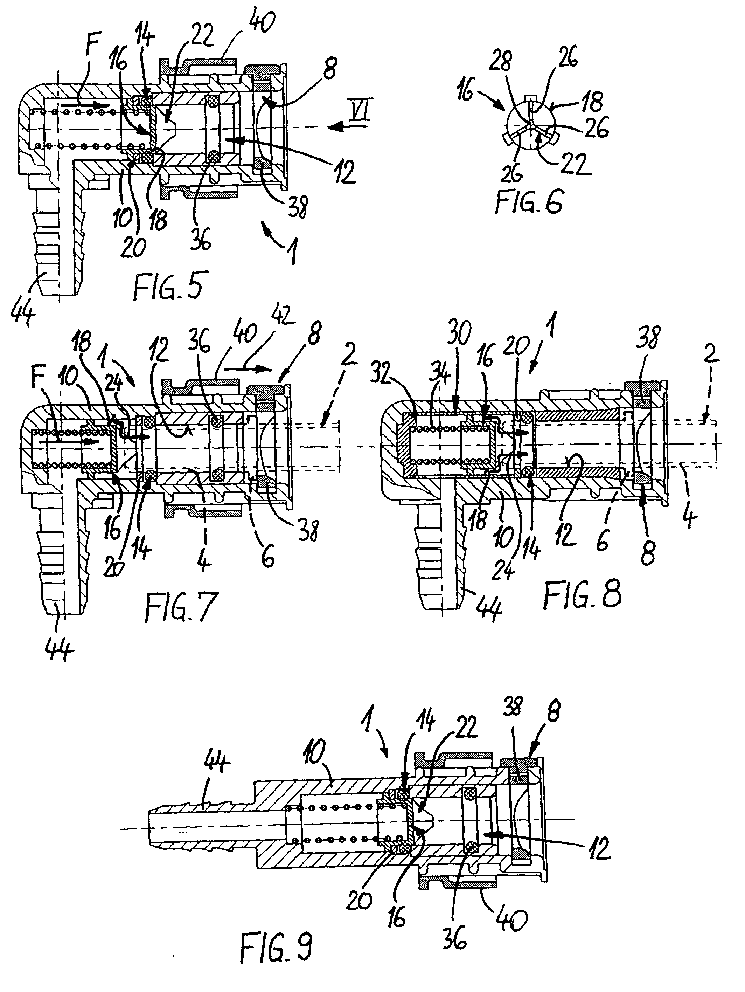

In den Ausführungen nach Fig. 1 - 4 ist der Dichtbereich 18 des Ventilelementes 16 leicht konisch ausgebildet, während er in den Ausführungen nach Fig. 5 bis 9 zylindrisch ist.

Das Ventilelement 16 ist entsprechend der Einsteckrichtung des Einsteckteils 2 axialbeweglich geführt und dabei in Schließrichtung mit einer Federkraft F beaufschlagt. In seiner federkraftbedingten Schließstellung (vgl. z.B. Fig. 1 und 5) liegt das Ventilelement 16 - nach Abdichtung mittels der Umfangsdichtung 14 - axial an einem Endanschlag 20 im Aufnahmegehäuse 10 an.

Das Ventilelement 16 weist zum unmittelbaren Anlagekontakt mit dem Einsteckteil 2 einen Anlageabschnitt 22 derart auf, daß bei einem Anlagekontakt zwischen der Mündungsöffnung des Einsteckteils 2 und dem Anlageabschnitt 22 mindestens eine Strömungspassage 24 für ein durch die Steckkupplung 1 strömendes Medium gebildet ist. Wie sich insbesondere aus Fig. 2 und 6 jeweils ergibt, besteht der Anlageabschnitt 22 vorzugsweise aus mindestens zwei, wie dargestellt drei, im wesentlichen radialen Stegen 26, die gemeinsam eine im wesentlichen konische Mantelfläche mit einer dem Einsteckteil 2 zugekehrten Spitze 28 definieren. Dabei weist der Anlageabschnitt 22 einen maximalen Durchmesser auf, der derart größer als der Innendurchmesser der Mündungsöffnung des Einsteckteils 2 ist, daß die Mündungsöffnung mit ihrem inneren Öffnungsrand etwa im axial mittleren Bereich des Anlageabschnittes 22 auf schräg verlaufenden Außenkanten der Stege 26 zur Anlage gelangt (siehe Fig. 3, 7 und 8). Auf diese Weise werden jeweils zwischen den Stegen 26 und der Mündungsöffnung des Einsteckteils 2 die Strömungspassagen 24 gebildet.

Wie sich aus Fig. 4 und 8 jeweils ergibt, ist gemäß der Erfindung vorgesehen, daß das Ventilelement 16 Bestandteil einer vormontierten Ventilpatrone 30 ist. Somit handelt es sich hierbei um eine an sich bekannte "Cartridge-Bauweise". Die Ventilpatrone 30 besteht aus einem inneren, hülsenartigen Einsatzgehäuse 32 und dem darin - zusammen mit einem die in Schließrichtung wirkende Federkraft F erzeugenden Federelement 34 - angeordneten Ventilelement 16. Dabei ist an dem in Schließrichtung weisenden Ende des Einsatzgehäuses 32 der Endanschlag 20 gebildet. Diese Ausführungsform erleichtert die Montage der erfindungsgemäßen Steckkupplung 1, indem die vormontierte Ventilpatrone 30 lediglich in das Aufnahmegehäuse 10 eingesetzt zu werden braucht.

In den Ausführungen nach Fig. 5, 7 und 9 ist als weiteres bevorzugtes Ausgestaltungsmerkmal der Erfindung vorgesehen, daß im Bereich zwischen der Umfangsdichtung 14 und der Öffnungsseite der Einstecköffnung 12 ein zweites Dichtelement 36 zum Abdichten des Ringspaltes zwischen dem Aufnahmegehäuse 10 und dem Einsteckteil 2 angeordnet ist. Dieses zusätzliche Dichtelement 36 dient einerseits zum Staubschutz, d. h. zum Schutz gegen ein Eindringen von Verschmutzungen, Feuchtigkeit und sonstigen Fremdkörpern von außen, und andererseits wird mit dem Dichtelement 36 auch ein zusätzlicher Leckageschutz erreicht, indem es die Steckkupplung 1 nach außen jedenfalls solange abdichtet, bis bei einer Entnahme des Einsteckteils 2 das Ventilelement 16 tatsächlich im Zusammenwirken mit der Umfangsdichtung 14 das Gehäuse verschließt, bevor das Einsteckteil 2 ganz über das Dichtelement 36 hinaus entnommen wird.

Die weiter oben bereits erwähnte Verriegelungseinrichtung 8 weist ein radialelastisch verformbares Halteelement 38 zum formschlüssigen Hinterrasten einer Ringstufe bzw. des Ringwulstes 6 des Einsteckteils 2 auf. Das Halteelement 38 ist mit Vorteil als spreizelastisches Klammer- bzw. Ringelement ausgebildet. Dabei kann in an sich bekannter Weise eine Sicherung gegen ungewolltes Spreizen und damit gegen ungewolltes Lösen des Einsteckteils 2 durch eine auf dem Aufnahmegehäuse 10 verschiebbar angeordnete Sicherungshülse 40 erreicht werden. Gemäß Fig. 7 wird die Sicherungshülse 40 in Pfeilrichtung 42 über den Bereich des Halteelementes 38 geschoben, wodurch die Sicherung gegen Spreizen erreicht wird.

Auf der der Einstecköffnung 12 entgegengesetzten Seite des durch die Steckkupplung 1 verlaufenden Strömungskanals weist das Aufnahmegehäuse 10 einen Anschlußstutzen 44 zum Anschluß einer nicht dargestellten Rohr- oder Schlauchleitung auf. Dabei kann der Anschlußstutzen 44 entweder etwa senkrecht zur Steckachse ausgerichtet sein (Fig. 1, 3, 5, 7 und 8), oder der Anschlußstutzen 44 weist entsprechend der Steckrichtung in die der Einstecköffnung 12 entgegengesetzte Richtung (Fig. 4 und 9). Vor allem für Rohrleitungen ist es zweckmäßig, den Anschlußstutzen 44 als Einschlagdorn mit einem üblichen Dornprofil auf dem Außenumfang auszubilden.

Es ist ferner besonders vorteilhaft, wenn im gekuppelten und dadurch geöffneten Zustand der Steckkupplung 1 an jeder Stelle des Strömungsweges ein wirksamer Strömungsquerschnitt gegeben ist, der zumindest etwa gleich dem Innenquerschnitt des Einsteckteils 2 bzw. des Anschlußstutzens 44 ist. Dies bedeutet, daß eine Drosselung des Strömungsquerschnittes durch das Rückschlagventil bzw. durch das Ventilelement 16 weitgehend vermieden wird.

## Patentansprüche

1. Steckkupplung, bestehend aus einem - insbesondere von einem Rohrleitungsende (4) gebildeten - Einsteckteil (2) und einem Aufnahmegehäuse (10) mit einer Einstecköffnung (12) für das Einsteckteil (2), mit einer Umfangsdichtung (14) zum Abdichten eines Ringspaltes zwischen dem Aufnahmegehäuse (10) und dem eingesteckten Einsteckteil (2) sowie mit einem im entkuppelten Zustand zum Auslaufschutz das Aufnahmegehäuse (10) durch Federkraft (F) selbsttätig schließenden und beim Einstecken mittels des Einsteckteils (2) gegen die Federkraft (F) zu öffnenden Ventilelement (16) einer vormontierten Ventilpatrone (30), wobei das Ventilelement (16) zum Schließen des Aufnahmegehäuses (10) unmittelbar mit derselben, dem Einsteckteil (2) zugeordneten Umfangsdichtung (14) zusammenwirkt, wobei das Ventilelement (16) in seiner federkraftbedingten Schließstellung - unter Abdichtung mittels der Umfangsdichtung (14) - axial an einem Endanschlag (20) anliegt,
**dadurch gekennzeichnet, dass** die Umfangsdichtung (14) als O-Ring ausgebildet ist und in der Schließstellung mit einem Dichtbereich (18) des Ventilelementes (16) zusammenwirkt, der den gleichen Außendurchmesser wie das Einsteckteil (2) aufweist, wobei das Ventilelement (16) nach Abdichtung an seinem Dichtbereich (18) mittels der Umfangsdichtung (14) axial an dem Endanschlag (20) am in Schließrichtung weisenden Ende eines hülsenartigen Einsatzgehäuses (32) der Ventilpatrone (30) anliegt.

2. Steckkupplung nach Anspruch 1,
**dadurch gekennzeichnet, dass** dieUmfangsdichtung(14)im entkuppelten Zustand unmittelbar im Ringspalt zwischen dem Aufnahmegehäuse (10) und dem Ventilelement (16) sowie im gekuppelten Zustand unmittelbar zwischen dem Aufnahmegehäuse (10) und dem Einsteckteil (2) angeordnet ist.

3. Steckkupplung nach Anspruch 1 oder 2,
**dadurch gekennzeichnet, dass** das Ventilelement (16) einen Anlageabschnitt (22) zum unmittelbaren Anlagekontakt mit dem Einsteckteil (2) derart aufweist, dass bei Anlagekontakt zwischen einer Mündungsöffnung des Einsteckteils (2) und dem Anlageabschnitt (22) mindestens eine Strömungspassage (24) gebildet ist.

4. Steckkupplung nach Anspruch 3,
**dadurch gekennzeichnet, dass** derAnlageabschnitt(22)aus mindestens zwei, insbesondere drei, im wesentlichen radialen Stegen (26) besteht, die vorzugsweise gemeinsam eine im wesentlichen konische Mantelfläche mit einer dem Einsteckteil (2) zugekehrten Spitze (28) definieren.

5. Steckkupplung nach Anspruch 3 oder 4,
**dadurch gekennzeichnet, dass** derAnlageabschnitt(22)des Ventilelementes (16) einen maximalen Durchmesser aufweist, der derart größer als der Innendurchmesser der Mündungsöffnung des Einsteckteils (2) ist, dass die Mündungsöffnung mit ihrem Öffnungsrand etwa im mittleren Bereich des Anlageabschnittes (22) zur Anlage gelangt.

6. Steckkupplung nach einem der Ansprüche 1 bis 5,
**dadurch gekennzeichnet, dass** die vormontierte Ventilpatrone (30) aus dem inneren, hülsenartigen Einsatzgehäuse (32) und dem darin - zusammen mit einem die in Schließrichtung wirkende Federkraft (F) erzeugenden Federelement (34) - angeordneten Ventilelement (16) besteht.

7. Steckkupplung nach einem der Ansprüche 1 bis 6,
**dadurch gekennzeichnet, dass** im Bereich zwischen der Umfangsdichtung (14) und der Öffnungsseite der Einstecköffnung (12) ein zweites Dichtelement (36) zum Abdichten des Ringspaltes zwischen dem Aufnahmegehäuse (10) und dem Einsteckteil (2) angeordnet ist.

8. Steckkupplung nach einem der Ansprüche 1 bis 7,
**gekennzeichnet durch** eine Verriegelungseinrichtung (8) zum insbesondere lösbaren Verriegeln des eingesteckten Einsteckteils (2).

9. Steckkupplung nach Anspruch 8,
**dadurch gekennzeichnet, dass** die Verriegelungseinrichtung (8) ein radialelastisch verformbares Halteelement (38) zum formschlüssigen Hinterrasten einer Ringstufe (6) des Einsteckteils (2) aufweist.

10. Steckkupplung nach einem der Ansprüche 1 bis 9,
**dadurch gekennzeichnet, dass** dasAufnahmegehäuse(10) mindestens einen Anschlußstutzen (44) zum Anschluß einer Rohr- oder Schlauchleitung aufweist, wobei der Anschlußstutzen (44) entsprechend der Steckachse in die der Einstecköffnung (12) entgegengesetzte Richtung weist oder quer, insbesondere etwa senkrecht, zur Steckachse ausgerichtet ist.

11. Steckkupplung nach einem der Ansprüche 1 bis 10,
**dadurch gekennzeichnet, dass** im gekuppelten Zustand an jeder Stelle des Strömungsweges ein wirksamer Strömungsquerschnitt gegeben ist, der größer oder zumindest etwa gleich dem Innenquerschnitt des Einsteckteils (2) und/oder des Anschlußstutzens (44) ist.

## Claims

1. Plug-in coupling, comprising a plug-in part (2) - formed in particular by an end of a pipeline (4) - and a receiving housing (10) with a plug-in opening (12) for the plug-in part (2), with a circumferential seal (14) for sealing an annular gap between the receiving housing (10) and the inserted plug-in part (2), and also with a valve element (16) of a pre-fitted valve cartridge (30), which element in the uncoupled state automatically closes the receiving housing (10) by spring force (F) to provide run-out protection and, when the plug-in part is inserted, opens it by means of the plug-in part (2) against the spring force (F), the valve element (16) interacting directly with the same circumferential seal (14), assigned to the plug-in part (2), for closing the receiving housing (10), the valve element (16) bearing in axial contact with an end stop (20) in its spring-force-induced closed position - with sealing by means of the circumferential seal (14) -, **characterized in that** the circumferential seal (14) is formed as an 0-ring and, in the closed position, interacts with a sealing region (18) of the valve element (16) which has the same outside diameter, as the plug-in part (2), the valve element (16) bearing in axial contact with the end stop (20) at the end of a sleeve-like insert housing (32) of the valve cartridge (30) that is pointing in the closing direction after sealing at the sealing region (18) of said element by means of the circumferential seal (14).

2. Plug-in coupling according to Claim 1, **characterized in that**, in the uncoupled state, the circumferential seal (14) is arranged directly in the annular gap between the receiving housing (10) and the valve element (16) and, in the coupled state, is arranged directly between the receiving housing (10) and the plug-in part (2).

3. Plug-in coupling according to Claim 1 or 2, **characterized in that** the valve element (16) has a contact portion (22) for direct bearing contact with the plug-in part (2) in such a way that at least one flow passage (24) is formed when there is bearing contact between an outlet opening of the plug-in part (2) and the contact portion (22).

4. Plug-in coupling according to Claim 3, **characterized in that** the contact portion (22) comprises at least two, in particular three, substantially radial ridges (26), which preferably, jointly define a substantially conical' outer enveloping surface with a point (28) which is made to face the plug-in part (2).

5. Plug-in coupling according to Claim 3 or 4, **characterized in that** the contact portion (22) of the valve element (16) has a maximum diameter which is larger than the inside diameter of the outlet opening of the plug-in part (2) with the effect that the outlet opening comes into bearing contact with its opening edge approximately in the middle region of the contact portion (22).

6. Plug-in coupling according to one of Claims 1 to 5, **characterized in that** the pre-fitted valve cartridge (30) comprises the inner, sleeve-like insert housing (32) and the valve element (16), arranged inside the said insert housing - together with a spring element (34) which produces the spring force (F) acting in the closing direction.

7. Plug-in coupling according to one of Claims 1 to 6, **characterized in that**, in the region between the circumferential seal (14) and the opening side of the plug-in opening (12), a second sealing element (36) is arranged for sealing the annular gap between the receiving housing (10) and the plug-in part (2).

8. Plug-in coupling according to one of Claims 1 to 7, **characterized by** a locking device (8) for, in particular, releasable locking of the inserted plug-in part (2).

9. Plug-in coupling according to Claim 8, **characterized in that** the locking device (8) has a retaining element (38) which can be elastically deformed in a radial direction for the form-fitting rear engagement of an annular step (6) of the plug-in part (2).

10. Plug-in coupling according to one of Claims 1 to 9, **characterized in that** the receiving housing (10) has at least one pipe union (44) for connecting a pipeline or hose line, the pipe union (44) pointing in a direction corresponding to the insertion axis but away from the plug-in opening (12), or is directed transversely, in particular approximately perpendicularly, to the axis of insertion.

11. Plug-in coupling according, to one of Claims 1 to 10, **characterized in that**, in the coupled state, an effective flow cross section which is greater than or at least approximately equal to the interior cross section of the plug-in part (2) and/or of the pipe union (44) is obtained at every point of the flow path.

## Revendications

1. Raccord enfichable composé d'une partie mâle (2) - constituée en particulier par
une extrémité de conduite rigide (4) - et d'un corps femelle (10) présentant une ouverture d'enfichage (12) pour la partie mâle (2), et comprenant une garniture d'étanchéité périphérique (14) destinée à obturer par un joint étanche une fente annulaire entre le corps femelle (10) et la partie mâle (2) enfichée, ainsi qu'un élément de soupape (16) appartenant à une cartouche de soupape (30) pré-montée qui se ferme automatiquement sous l'action d'une force de ressort (F) dans l'état désaccouplé pour protéger le corps femelle (10) de l'écoulement et qui, au moment de l'enfichage, doit être ouvert au moyen de la partie mâle (2) à l'encontre de la force de ressort (F), dans lequel, pour fermer le corps femelle (10), l'élément de soupape (16) coopère directement avec la même garniture d'étanchéité périphérique (14) qui est associée à la partie mâle (2), l'élément de soupape (16) étant appuyé axialement contre une butée d'extrémité (20) dans sa position de fermeture déterminée par la force de ressort - avec établissement du joint étanche au moyen de la garniture d'étanchéité périphérique (14),
**caractérisé en ce que** la garniture d'étanchéité périphérique (14) est constituée par une bague torique et que, dans la position de fermeture, elle coopère avec une région d'étanchéité (18) de l'élément de soupape (16) qui présente le même diamètre extérieur que la partie mâle (2), cependant que, après établissement du joint étanche dans sa région d'étanchéité (18) au moyen de la garniture d'étanchéité périphérique (14), l'élément de soupape (16) s'appuie axialement au niveau de la butée d'extrémité (20) à l'extrémité d'une boîte rapportée (32) en forme de douille de la cartouche de soupape (30) qui pointe dans le sens de la fermeture.

2. Raccord enfichable selon la revendication 1,
**caractérisé en ce que**, dans l'état désaccouplé, la garniture d'étanchéité périphérique (14) est disposée directement dans la fente annulaire entre le corps femelle (10) et l'élément de soupape (16), tandis que, dans l'état accouplé, elle est disposée directement entre le corps femelle (10) et la partie mâle (2).

3. Raccord enfichable selon la revendication 1 ou 2,
**caractérisé en ce que** l'élément de soupape (16) présente un segment d'appui (22) destiné à entrer en contact d'appui direct avec la partie mâle (2) de telle sorte qu'il se forme au moins un passage d'écoulement (24) lorsqu'il y a contact d'appui entre une ouverture de débouché de la partie mâle (2) et le segment d'appui (22).

4. Raccord enfichable selon la revendication 3,
**caractérisé en ce que** le segment d'appui (22) est composé d'au moins deux, en particulier trois, branches sensiblement radiales (26) qui définissent de préférence ensemble une surface enveloppe sensiblement conique qui possède une pointe (28) dirigée vers la partie mâle (2).

5. Raccord enfichable selon la revendication 3 ou 4,
**caractérisé en ce que** le segment d'appui (22) de l'élément de soupape (16) présente un diamètre maximum qui est suffisamment supérieur au diamètre intérieur de l'ouverture de débouché de la partie mâle (2) pour que l'ouverture de débouché place son bord d'ouverture en appui à peu près dans la région médiane du segment d'appui (22).

6. Raccord enfichable selon une des revendications 1 à 5,
**caractérisé en ce que** la cartouche de soupape (30) pré-montée est composée de la boîte rapportée intérieure (32) en forme de douille et de l'élément de soupape (16) disposé à l'intérieur - conjointement avec un élément de ressort (34) qui produit la force de ressort (F) agissant dans le sens de la fermeture.

7. Raccord enfichable selon une des revendications 1 à 6,
**caractérisé en ce que**, dans la région comprise entre la garniture d'étanchéité périphérique (14) et le côté ouvert de l'ouverture d'enfichage (12), est disposé un deuxième élément d'étanchéité (36) destiné à obturer à joint étanche la fente annulaire entre le corps femelle (10) et la partie mâle (2).

8. Raccord enfichable selon une des revendications 1 à 7,
**caractérisé par** un dispositif de verrouillage (8) servant à verrouiller la partie mâle (2) enfichée, en particulier de façon démontable.

9. Raccord enfichable selon la revendication 8,
**caractérisé en ce que** le dispositif de verrouillage (8) comprend un élément de retenue (38) déformable élastiquement dans la direction radiale, destiné à s'enclencher par sûreté de forme derrière un épaulement annulaire (6) de la partie mâle (2).

10. Raccord enfichable selon une des revendications 1 à 9,
**caractérisé en ce que** le corps femelle (10) présente au moins une tubulure de raccordement (44) pour le raccordement à une conduite souple ou rigide, la tubulure de raccordement (44) pointant selon l'axe d'enfichage en sens inverse de l'ouverture d'enfichage (12) ou étant dirigée transversalement, en particulier à peu près perpendiculairement, à l'axe d'enfichage.

11. Raccord enfichable selon une des revendications 1 à 10,
**caractérisé en ce que**, dans l'état accouplé, il existe en chaque point du trajet de l'écoulement une section d'écoulement effective qui est supérieure ou du moins à peu près égale à la section intérieure de la partie mâle (2) et/ou de la tubulure de raccordement (44).
